# EUROPÄISCHE PATENTSCHRIFT

(11) **EP 3 611 315 B1**
(45) Veröffentlichungstag und Bekanntmachung des Hinweises auf die Patenterteilung: **01.11.2023**
(21) Anmeldenummer: 19165888.9
(22) Anmeldetag: 28.03.2019
(51) Int. Cl.: E04G 23/02, G21F 1/10, G21F 9/28, G21F 7/00, G21F 9/30

(54) **BEHÄLTER EINER BIOGASANLAGE ODER GÜLLEBEHÄLTER**
TANK OF A BIOGAS PLANT OR SLURRY TANK
RÉSERVOIR D'UNE INSTALLATION DE BIOGAZ OU RÉSERVOIR DE LISIER

(30) Priorität: 16.08.2018 DE 102018006470
(43) Veröffentlichungstag der Anmeldung: 19.02.2020
(73) Patentinhaber: SK Wiegrink Beteiligungs GmbH, 46395 Bocholt (DE)
(72) Erfinder: Moddenborg, Dirk, 46395 Bocholt (DE); Hassenberg, Klaus, 46342 Velen (DE)
(74) Vertreter: Brinkmann & Partner

(56) Entgegenhaltungen:
- WO-A2-2011/143179
- DE-A1-102008 025 091
- US-A- 5 098 059
- US-A- 5 763 734
- US-A1- 2004 175 559

## Beschreibung

Die Erfindung betrifft einen Behälter einer Biogasanlage oder Güllebehälter aus Beton oder Metall.

Beton- und Metallflächen werden in vielfältiger Form für den Aufbau von Gebäuden oder bestimmten Einrichtungen wie beispielsweise Biogasanlagen, Güllebehälter, etc. eingesetzt. Als Metall wird hierbei vorzugsweise Edelstahl verwendet, oder aber in einfachen Fällen eine Betonwanne. Leider hat sich im Laufe der Zeit herausgestellt, dass der Beton den Säurebelastungen bei Biogasanlagen oder Güllebehältern nicht dauerhaft standhält. Durch die Säurebelastung wird der Beton allmählich zersetzt, sodass großflächige Bereiche abplatzen. Aber auch wenn Edelstahlbehälter zum Einsatz kommen, wird der Edelstahl angegriffen und es entstehen Undichtigkeiten, die aufgrund von gesetzlichen Vorgaben in jedem Fall vermieden werden müssen.

Soweit eine Sanierung erforderlich ist, besteht beispielsweise bei Beton die Notwendigkeit die oberen Betonschichten abzutragen und neu aufzubauen, wobei entsprechende Haftmittel verwendet werden müssen, um einen neuen Anstrich oder eine neue Beschichtung vorzusehen. Diese Vorgehensweise ist sehr zeitaufwendig und kostenintensiv. Durch derlei Maßnahmen kann aber auch für die Zukunft nicht sichergestellt werden, dass der Beton erneut angegriffen und nach einigen Jahren eine erneute Sanierung notwendig wird. Ein weiteres Problem liegt dadurch vor, dass schwach kontaminierte Materialien, insbesondere Abbruchmaterialien, beispielsweise von Kernkraftwerken so gelagert werden müssen, dass eine Kontamination der Umgebung so gering wie möglich gehalten wird. Bei den Abbruchmaterialien kann es sich beispielsweise um Mauerstücke, Betonstücke oder Teile von Kernkraftwerken handeln, die in einer entsprechend handhabbaren Größe herausgetrennt und über einen längeren Zeitraum einer ordnungsgemäßen Lagerung zugeführt werden müssen. Hierbei kann es sich ebenso um geschredderten Bauschutt handeln, welcher in einer Form gepresst wird.

Speziell beim Rückbau von Kernkraftanlagen und zwischengelagerten Rückbaufragmenten in Form von Abbruchmaterialien besteht stets die Gefahr, dass radioaktive Partikel durch Erosion oder mechanische Einwirkung in die Umwelt gelangen. Diese Gefahr besteht besonders beim Transport von Rückbaufragmenten, welche aufgrund Ihrer Größe oder Struktur nicht in speziellen Transportbehältern untergebracht werden können. Beim Zerschneiden, Zersägen oder Zerkleinern entsteht stets Abrieb in Form von Spähen oder Staub, der in die Umwelt gelangen kann. Zur Minimierung des bestehenden Kontaminationsrisikos werden solche Rückbaufragmente häufig durch ein Dekontaminierungsverfahren behandelt, bei dem die Oberfläche der Rückbaufragmente mit flüssigen Medien gereinigt werden. Hierdurch wird an der Oberfläche haftender radioaktiver Staub, der sich leicht von der Oberfläche lösen und in die Umwelt gelangen kann entfernt. Das hierbei verwendete Reinigungsmedium, dass den radioaktiven Staub enthält ist aber als Sekundärabfall zu betrachten, der ebenfalls aufwendig weiterbehandelt, zwischen- oder endgelagert werden muss. DE 10 2008 025091 A1 betrifft eine Tunnelwand mit einer Betonauskleidung. Da die Betonauskleidung an sich nicht wasserdicht ausgebildet ist, wird zur Eindämmung von Wasseraustritten eine Polyharnstoffbeschichtung zwischen dem Gestein der Tunnelwand und der Betonauskleidung ausgebildet. Dabei kann die Polyharnstoffbeschichtung direkt auf die Gesteinsoberfläche ausgebracht werden oder alternativ unter Einbettung eines Kunststoffgewebes um die Reißfestigkeit zu erhöhen. In jedem Fall ist es der Sinn und Zweck der Polyharnstoffbeschichtung, die Armierung innerhalb der Betonauskleidung vor Feuchtigkeit zu schützen.

Der vorliegenden Erfindung liegt die Aufgabenstellung zugrunde, einen dichten Behälter einer Biogasanlage oder Güllebehälter bereitzustellen, welcher gleichzeitig einen Säureschutz bietet.

Erfindungsgemäß wird ein Behälter einer Biogasanlage oder Güllebehälter nach Anspruch 1 bereitgestellt.

Um weitere zukünftige Sanierungen von Beton- oder Metallflächen zu vermeiden beziehungsweise lange hinauszuzögern, sieht das Verfahren zur Bereitstellung des erfindungsgemäßen Behälters einer Biogasanlage oder Güllebehälters vor, dass Isolierplatten auf die Innenwandung der Behälterwand aufgebracht werden und im Anschluss eine elastische Beschichtung aus Polyharnstoff oder einem Polyharnstoffgemisch mit einem Anteil von 1% bis 95% Polyharnstoff erfolgt. Durch das vorherige Aufbringen von Isolierplatten wird quasi eine Schale innerhalb des Behälters erzielt, die von außen durch den Beton oder die Metallflächen abgestützt wird. Durch die elastische Beschichtung aus Polyharnstoff wird eine feuchtigkeitsundurchdringliche Schicht mit säurebeständigen Eigenschaften aufgetragen, die nicht nur langlebig ist, sondern auch eine Elastizität aufweist, sodass Materialbewegungen des Betons oder der Metallflächen die elastische Beschichtung, zum Beispiel durch Einreißen, nicht zerstören. Durch die säurebeständigen Eigenschaften kann zudem eine lange Lebensdauer gewährleistet werden.

Durch die Anwendung des Verfahrens wird somit in vorteilhafter Weise erreicht, dass ältere Biogasanlagen oder Güllebehälter weiter verwendet werden können. Darüber hinaus besteht die Möglichkeit dieses Verfahren auch bei Flachdächern oder Kelleraußenwänden anzuwenden, indem ebenfalls Isolierplatten entweder auf den Flachdächern ausgelegt oder an die Kelleraußenwände geklebt werden, um diese anschließend mit der elastischen Beschichtung aus Polyharnstoff zu versehen, was allerdings keinen Teil der Erfindung darstellt.

Nicht erfindungsgemäß eignet sich das Verfahren ferner zur Behandlung und Versiegelung von Rückbaufragmenten, insbesondere Abbruchmaterialien von Kernkraftwerken können unbehandelt speziell ohne vorherigen Reinigung mit einer elastischen Beschichtung versehen werden, welche sich vollständig um die Abbruchmaterialien legt und somit eine Erosion der Abbruchmaterialien verhindert, sodass kontaminierte Stoffe nicht in die Umwelt gelangen.

Ein wesentlicher Vorteil einer derartigen Beschichtung in den oben genannten Einsatzmöglichkeiten ist darin zu sehen, dass diese einfach und schnell sowie kostengünstig in einer gewünschten Dicke aufgetragen werden kann. Hierbei besteht ohne weiteres die Möglichkeit die Dicke der Beschichtung an die Größe und Masse oder die zu erwartenden Einwirkungen auf beispielsweise ein radioaktives oder radioaktiv kontaminiertes Rückbaufragment anzupassen. Die durch den Polyharnstoff oder ein Polyharnstoffgemisch bestehende Beschichtung ist hierbei extrem elastisch und weist eine hohe Dehnbarkeit und einen hohen Abriebwiderstand auf, sodass sie gegen mechanische Einwirkungen beständig ist und keine Rissbildung eintritt. Darüber hinaus weist die Beschichtung eine hohe chemische Beständigkeit, zum Beispiel gegen Lösungsmittel, Säure und Laugen und einen hohen Salzwiderstand auf, sodass eine Versiegelung auch in chemisch aggressiven Umgebungen gewährleistet werden kann. Die Beschichtung mit Polyharnstoff ist darüber hinaus feuchtigkeitsabweisend, da sie eine geschlossene und nicht poröse Oberfläche aufweist, sodass kein Flüssigkeitstransport von beispielweise radioaktiven Partikeln von der kontaminierten Oberfläche in die Umgebung erfolgen kann.

Ein weiterer wesentlicher Vorteil besteht dadurch, dass die Beschichtung von minus 32 Grad Celsius bis ca. 60 Grad Celsius auch bei hoher Feuchtigkeit beständig ist. Darüber hinaus besitzt die Beschichtung eine sehr gute Haftung auf Baumaterialien und Metallen, sodass ein lokales Ablösen der Beschichtung im Laufe der Zeit nicht eintritt. Aber selbst wenn ein lokales Ablösen der Beschichtung von der Oberfläche auftreten sollte, bleibt die Versiegelung aufgrund der Dehnbarkeit und Elastizität der Beschichtung beständig und reißt nicht auf. Der hierbei verwendete Polyharnstoff eignet sich somit hervorragend dazu, die mit Säure belasteten Behältern, radioaktive oder radioaktiv kontaminierte Abbruchmaterialien, wie zum Beispiel Umbau und Rückbaufragmente von Atomkraftwerken dauerhaft zu versiegeln.

Bei Polyharnstoff handelt es sich um einen biologischen Stoff, der aus anorganischen Substanzen hergestellt wird, wobei die Herstellung nicht aus Harnstoff erfolgt. In der Regel wird Polyharnstoff als Polyaddition von Diaminen und Isocyanaten hergestellt. Dieses hergestellte Polymer besitzt eine widerkehrende Struktur, die dem Harnstoff ähnelt, sodass es zu der Bezeichnung Polyharnstoff gekommen ist. Ein anderer Begriff für Polyharnstoff ist Aminoplast. Solche Polymere können sowohl als harte oder flexible Schaumstoffe eingesetzt werden, wobei diese Polymere sehr beständig gegenüber Lösungsmitteln und Chemikalien und darüber hinaus kratzfest ausgebildet sind und einen hohen Oberflächenglanzgrad aufweisen. Des Weiteren findet sich sehr oft die Verwendung von Polymeren aus Polyurethan oder Polyharnstoff, wobei das Polyharnstoffharz aus Polythermen und einem aminterminierten Polyol besteht. Dieses Polymer ist sehr aktiv und benötigt keine besonderen Katalysatoren. Dies hat zur Folge, dass eine kurze Verknüpfungszeit vorliegt und somit eine schnelle Aushärtung, beispielsweise auf der Betonoberfläche oder Metalloberfläche erfolgt. Verwendungsformen liegen in Pulverform, gegebenenfalls auch in flüssiger Form vor. Durch Zugabe entsprechender Beigaben besteht die Möglichkeit eine Polyharnstoffbeschichtung durch Aufschäumen, Aufspritzen, Aufwalzen oder Aufstreichen herzustellen.

Die Beschichtung wird aus dem Reaktionsprodukt einer Isocyanatkomponente und einer Harzmischungskomponente gebildet. Die Isocyanatkomponente kann aromatisch oder aliphatisch sein, wobei es sich bei der Isocyanatkomponente um ein Monomer, ein Polymer oder eine Variantenreaktion von Isocyanaten, eines Quasiprepolymers oder eines Prepolymers handeln kann. Das Prepolymer oder Quasiprepolymer kann aus einem Polymerharz bestehen, das von Amino- oder Hydroxyl-Gruppen abgeschlossen wird. Die Harzmischung kann aus Polymerharzen, die von Aminogruppen abgeschlossen werden und/oder Kettenverlängerern, die von Aminogruppen abgeschlossen werden, bestehen. Die von Aminogruppen abgeschlossenen Polymerharze weisen keine Hydroxyl-Anteile auf. Die beiden Komponenten, aus denen die Beschichtung gebildet wird, werden kurz vor dem Auftragen auf die zu versiegelnde radioaktive oder radioaktiv kontaminierte Oberfläche aufgetragen, sodass sich auf dieser eine Beschichtung ausbildet, die im Wesentlichen aus Polyharnstoff besteht. Die im Wesentlichen aus Polyharnstoff bestehende Beschichtung weist gegenüber den aus dem Stand der Technik bekannten Stoffen zur Versiegelung von Oberflächen eine Reihe von Vorteilen auf. Polyharnstoff ist das einzige vollständig wasserunempfindliche hydrolysebeständige Beschichtungssystem und wird ohne Katalysatoren produziert. Keine derzeit aus dem Stand der Technik bekannte Beschichtung weist die gleichen vorteilhaften Eigenschaften auf, wie eine Beschichtung, die im Wesentlichen aus Polyharnstoff besteht. Da die beiden Ausgangskomponenten in flüssiger Form vorliegen, ist ein formunabhängiges Auftragen der Beschichtung auf die zu versiegelnde Oberfläche zum Beispiel durch Besprühen der Oberfläche mit dem kurz zuvor gebildeten Gemisch aus beiden Komponenten möglich. Dadurch kann vorteilhaft die Oberfläche beliebig geformter Rückbaufragmente einfach schnell und günstig vollflächig beschichtet werden. Die Reaktionszeit der beiden Komponenten ist einstellbar und beträgt beispielsweise 2 bis 7 Sekunden. Durch die schnelle Reaktionszeit tritt kein Verstauben der Oberfläche und kein Zerfließen der Beschichtung vor ihrem Abbinden auf. Die so ausgebildete Beschichtung verhindert zuverlässig ein Erodieren der Oberfläche des Rückbaufragmentes, sodass keine radioaktiven Partikel in die Umwelt gelangen können.

Der Polyharnstoff kann hierbei Bestandteile von Polyurethan, Polyphenol, Polyolefin, Polypropylen, Polyethylen, Polystyrol, Polyester, Polyethylenoxid, Polyterephtalat, Polyacryl, Polyamid oder Polycarbonat als Einzelkomponente oder als Gemisch aus verschiedenen dieser Substanzen enthalten. Diese Stoffe können einer der beiden Komponenten zugegeben werden, um beispielsweise die Elastizität, die Abbindungsgeschwindigkeit oder andere besondere Eigenschaften in gewünschter Weise zu beeinflussen.

Bei größeren Beschädigungen der Beton- oder Metallflächen können diese vor dem Aufbringen der Isolierplatten gegebenenfalls gesandstrahlt werden, um die porösen losen Materialien beispielsweise des Betons zu entfernen, damit ein fester Untergrund geschaffen wird. Isolierplatten werden hierbei unmittelbar auf die zu sanierenden Beton- oder Metallflächen aufgeklebt, wobei das verwendete Klebematerial rückseitig auf die Isolierplatten aufgetragen wird. Zusätzlich wird der Fugenbereich der Isolierplatten mit Klebematerial aufgefüllt, damit eine ausreichende Festigkeit erzielt wird.

In besonders schwierigen Fällen kann das Verfahren dadurch ergänzt werden, dass die Isolierplatten zusätzlich mit Dübeln an den zu sanierenden Wandflächen befestigt werden. Die Dübel sind zum Halten der Isolierplatten vorgesehen, wobei auf 1 m² ca. 4 bis 8 Dübel ausreichend sind. Hierzu können beispielsweise Dübel verwendet werden, wie sie aus dem Bauhandwerk für die Auftragung von Isolierschichten auf Außenflächen der Gebäude vorgesehen sind.

Die Isolierplatten können eine Dicke von 10 bis 40 mm, vorzugsweise 15 bis 25 mm aufweisen und sind in dieser Dicke mit einer ausreichenden Stabilität ausgestattet. Durch die erfolgte Verklebung ggf. auch zusätzliche Verwendung von Dübeln wird eine stabile Innenschale der Behälter erreicht. Soweit Unebenheiten bei den zu sanierenden Beton- oder Metallflächen vorliegen, besteht die Möglichkeit die Isolierplatten im Übergangs- oder Nahtbereich zumindest teilweise auszuklinken, um auf diese Weise eine glatte Innenfläche zu erreichen.

Erfindungsgemäß werden für die Isolierplatten Styrodurplatten eingesetzt, welche sich durch eine hohe Stabilität und ausreichende Druckfestigkeit auszeichnen.

Nicht erfindungsgemäß besteht alternativ die Möglichkeit einen PU-Schaum auf die Beton- oder Metallflächen aufzutragen. Der aufgetragene PU-Schaum kann hierbei eine Dicke von 5 bis 20 mm, vorzugsweise 10 bis 15 mm aufweisen und bietet ebenfalls eine ausreichende Stabilität, um im Anschluss eine elastische Beschichtung beispielsweise aus Polyharnstoff aufzutragen.

In vorteilhafter Weise besteht die Möglichkeit, dass die Beschichtung unmittelbar auf die Isolierplatten oder den PU-Schaum aufgetragen wird, wobei eine Beschichtung mit einer Schichtdicke von 1 bis 8 mm, vorzugsweise 2 bis 4 mm möglich ist.

Soweit nicht erfindungsgemäß eine Versiegelung von Abbruchmaterialien, welche beispielsweise kontaminiert sein können, vorgesehen ist, kann die Beschichtung unmittelbar auf die Abbruchmaterialien aufgetragen werden oder es kann zuvor ein Geotextil, ein Fließ oder eine Folie gegebenenfalls auch selbstklebende Folie um die Abbruchmaterialien gewickelt werden. Anschließend wird auf das Geotextil, Fließ oder die Folie die elastische Beschichtung aufgesprüht. Eine solche Vorgehensweise bietet sich immer dann an, wenn zu befürchten ist, dass eine mechanische Einwirkung zu einem späteren Zeitpunkt stattfinden kann. Eine vorherige Umwicklung mit Geotextil, einem Fließ oder einer Folie bietet sich ebenso für den Fall an, dass die Abbruchmaterialien selbst porös sind und die Gefahr besteht, dass diese im Laufe der Zeit auseinanderfallen. Ein besonderer Vorteil der Polyharnstoffbeschichtung besteht darin, dass die Beschichtung mehrfach übereinander auftragbar ist und eine feste Verbindung mit dem Untergrund eingeht, sodass zu einem späteren Zeitpunkt, nach Reinigung der älteren Beschichtung, ein erneuter Auftrag erfolgen kann.

Polyharnstoff hat sich hierbei überraschenderweise zur Auskleidung von Behältern und Becken als hervorragend geeignet herausgestellt, da dieser Stoff sehr elastisch ist und somit bis zu einer gewissen Grenze Materialbewegungen und daraus resultierenden Risse aufgrund der Eigenelastizität überdeckt. Auf diese Weise kann somit für viele Jahre ein sicherer Isolierschutz für Biogasanlagen, Güllebehälter, Klärbecken, Auffangbecken und Wasserbehälter aufgetragen werden. Gleiches gilt selbstverständlich auch für Flachdächer und Kelleraußenwände. Speziell bei Flachdächern oder Kelleraußenwänden kommt hierbei der Feuchtigkeitsschutz zur Geltung. Dadurch, dass Polyharnstoff wasserabweisend ist besteht durch eine Polyharnstoffbeschichtung eine gute Feuchtigkeitsisolierung. Die vorgenannten Vorteile sind ebenfalls bei der Beschichtung von Abbruchmaterialien von Bedeutung.

Ein besonderer Vorteil besteht ferner darin, dass jederzeit ohne Nachteile erneut auf den vorhandenen Untergrund mit einer Polyharnstoffbeschichtung gegebenfalls weitere Beschichtungen aufgetragen werden können oder bei einer Unterbrechung von Arbeiten zu einem späteren Zeitpunkt die Arbeit jederzeit wieder aufgenommen werden kann, ohne dass schadhafte Bereiche oder Nahtstellen entstehen. Im Weiteren kommt hinzu, dass eine Polyharnstoffbeschichtung eine besonders gute Haftung und innige Verbindung mit dem Untergrundmaterialien eingeht und somit von diesen nur wieder schwer entfernt werden kann. Von weiterem Vorteil ist, dass beim Auftragen der Polyharnstoffbeschichtung keine weiteren Hilfsmaßnahmen wie beispielsweise Schalungen oder dergleichen notwendig sind.

Ein Vorteil besteht ferner dadurch, dass die Beschichtung mehrfach auch übereinander auftragbar ist und somit ansatzlos der Arbeitsprozess unterbrochen und zu einem späteren Zeitpunkt wieder fortgesetzt werden kann, wobei gegebenenfalls, falls es zu einer Beschädigung gekommen ist, ein nachträgliches Auftragen der Polyharnstoffbeschichtung möglich ist und keinerlei Nachteile entstehen.

Erfindungsgemäß ist vorgesehen, dass Dehnungsstreifen in die Beschichtung, im Stoßbereich der Isolierplatten eingebettet werden. Die Dehnungsstreifen sollen hierbei im Stoßbereich Isolierplatten überdecken und eine mögliche Rissbildung verhindern. Die Dehnungsstreifen können mehrere Zentimeter breit sein, vorzugsweise werden 4 cm breite Dehnungsstreifen eingesetzt.

Die Erfindung wird im Weiteren anhand der Figuren näher erläutert.

Es zeigt
- Fig. 1: in einer Draufsicht eine geöffnete Biogasanlage,
- Fig. 2: einen Auszug der Innenwand einer Biogasanlage,
- Fig. 3: in einer Detaildarstellung den Übergang zwischen der Wand und dem Bodenbereich einer Biogasanlage und
- Fig. 4: in einer perspektivischen Ansicht die prinzipielle Vorgehensweise zur Beschichtung von Abbruchmaterialien (nicht erfindungsgemäß).

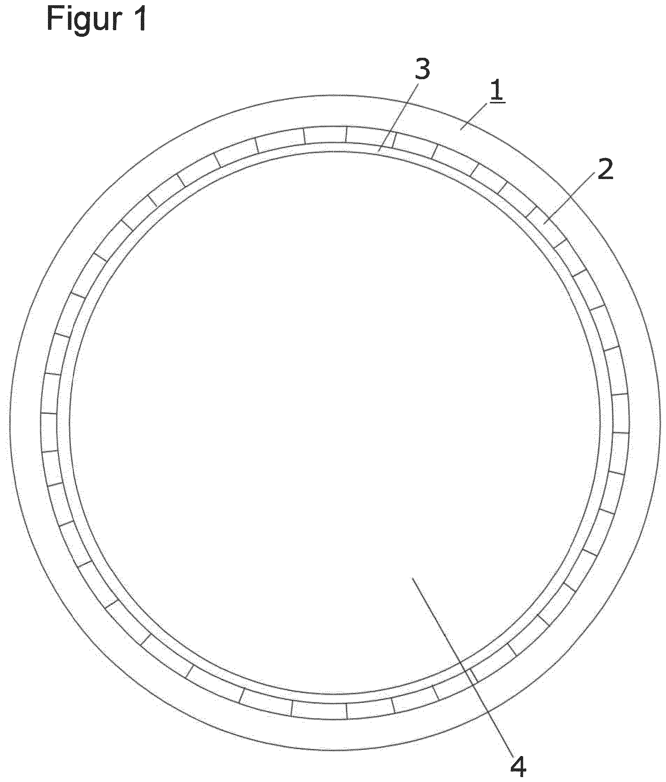

Figur 1 zeigt in einer Draufsicht beispielsweise eine geöffnete Biogasanlage, von der die äußere ringförmige Betonwand 1 dargestellt ist. Auf die Wand 1 sind auf der Innenseite Isolierplatten 2 aufgetragen, die anschließend mit einer elastischen Beschichtung 3 versehen ist. Die Betonwand 1 entspricht dem ursprünglichen Aufbau einer Biogasanlage oder eines Güllebehälters und wird zur Sanierung zunächst mit den Isolierplatten 2 beschichtet, welche beispielsweise aufgeklebt und in Einzelfällen auch zusätzlich mittels eines Dübels an der Betonwand 1 verankert werden können. Nachdem die Betonwand 1 vollständig ausgekleidet wurde erfolgte im Anschluss das Auftragen von elastischen Beschichtungen aus Polyharnstoff oder einem Polharnstoffgemisch mit einem Anteil von 1 bis 95 % Polyharnstoff. Mithilfe der elastischen Beschichtung 3 wird die gesamte Oberfläche der Betonwand 1 abgedichtet, wobei die verwendete elastische Beschichtung 3 säurebeständig ist und den Kontakt der gelagerten Stoffe für die Biogasanlagen oder Güllebehälter mit der Betonwand 1 verhindert. Selbstverständlich wird ebenso der Boden 4 mit Isolierplatten beschichtet und anschließend eine elastische Beschichtung aufgetragen, sodass sich die elastische Beschichtung 3 vom Boden ausgehend über die Wände bis zur jeweiligen Höhe der Biogasanlagen beziehungsweise Güllebehälter erstreckt. Nicht erfindungsgemäß besteht alternativ die Möglichkeit anstelle der Isolierplatten 2 einen PU-Schaum aufzutragen, auf dem anschließend die elastische Beschichtung 3 aufgetragen, vorzugsweise aufgespritzt wird.

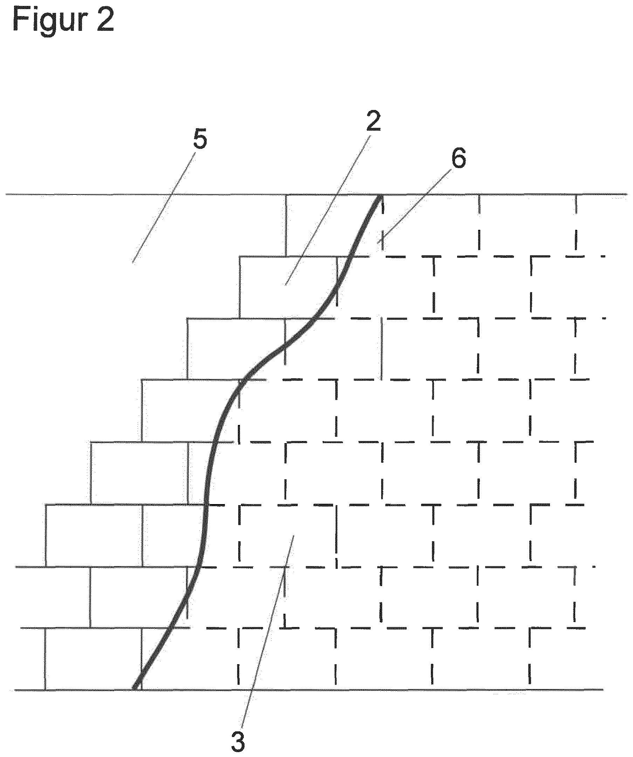

Figur 2 zeigt einen Teil der Innenwandung 5 der Betonwand 1. Auf diese Innenwandung 5 werden die Isolierplatten 2 aufgeklebt, wobei die verwendeten Klebematerialien rückseitig der Isolierplatten 2 und im Fugenbereich 6 verwendet werden. Die Isolierplatten 2 sind im gezeigten Ausführungsbeispiel in einem versetzten Verband aufgeklebt und werden anschließend mit der dauerelastischen Beschichtung 3 versehen, welche letztendlich die Innenfläche der Biogasanlage oder des Güllebehälters bildet.

Das gezeigte Ausführungsbeispiel betrifft einen runden Behälter, wobei diese Behälter auch eine andere Form aufweisen können und ebenfalls die Möglichkeit des Anbringens von Isolierplatten 2 und einer elastischen Beschichtung 3 möglich ist. Speziell bei den Biogasanlagen und Güllebehältern wird die Beschichtung hierbei auch im Bodenbereich vorgenommen.

Nicht erfindungsgemäß können in ähnlicher Weise aber auch Flachdächer oder Kelleraußenwände abgedichtet werden. Nachdem das Dach beziehungsweise Mauerwerk fertiggestellt worden ist, können die Isolierplatten 2 aufgeklebt werden, um im Anschluss die elastische Beschichtung 3 aufzutragen.

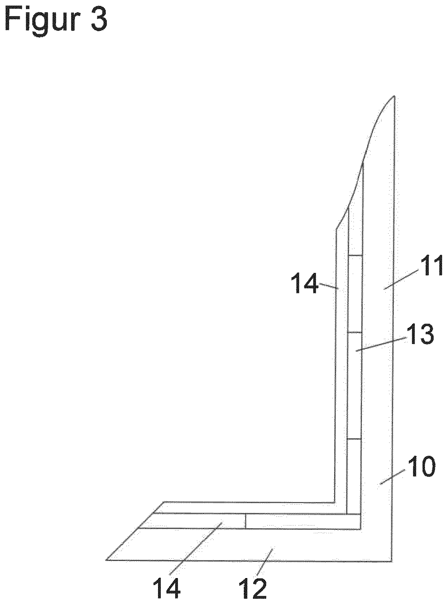

Figur 3 zeigt einen Eckbereich, beispielsweise einer Biogasanlage aus der ersichtlich wird, dass eine Betonwanne 10 sich sowohl in den Wandbereich 11 als auch in den Bodenbereich 12 erstreckt. Sowohl auf dem Bodenbereich 12 als auch im Wandbereich 11 sind die Isolierplatten 13 aufgeklebt und anschließend mit einer elastischen Beschichtung 14 versehen worden. Die elastische Beschichtung kann beispielsweise aufgespritzt oder aufgestrichen werden, wobei eine Schichtdicke von 1 bis 8 mm vorzugsweise von 2 bis 4 mm verwendet wird. Demgegenüber weisen die Isolierplatten eine Schichtdicke von 10 bis 40 mm, vorzugsweise 15 bis 25 mm auf.

Aufgrund der Tatsache, dass sowohl der Wandbereich 11 als auch der Bodenbereich 12 mit der elastischen Beschichtung 14 versehen ist, kann auf diese Weise in Biogasanlagen oder in Güllebehältern eine Sanierung erfolgen, ohne dass die Betonwanne 10 ebenfalls erneuert wird. Speziell durch die elastische Beschichtung aus Polyharnstoff oder einem Polyharnstoffgemisch mit dem Anteil von 1 bis 95 % Polyharnstoff wird erreicht, dass die gelagerten Stoffe aufgrund aggressiver Bestandteile den Wandbereich 11 und Bodenbereich 12 nicht angreifen können. Somit kann mit dem aufgezeigten Verfahren eine vorhandene Anlage saniert und zusätzlich abgedichtet werden, um deren Lebensdauer deutlich zu verlängern. Alternativ kann anstelle von Isolierplatten 13 ein PU-Schaum auf die Betonwände aufgetragen werden.

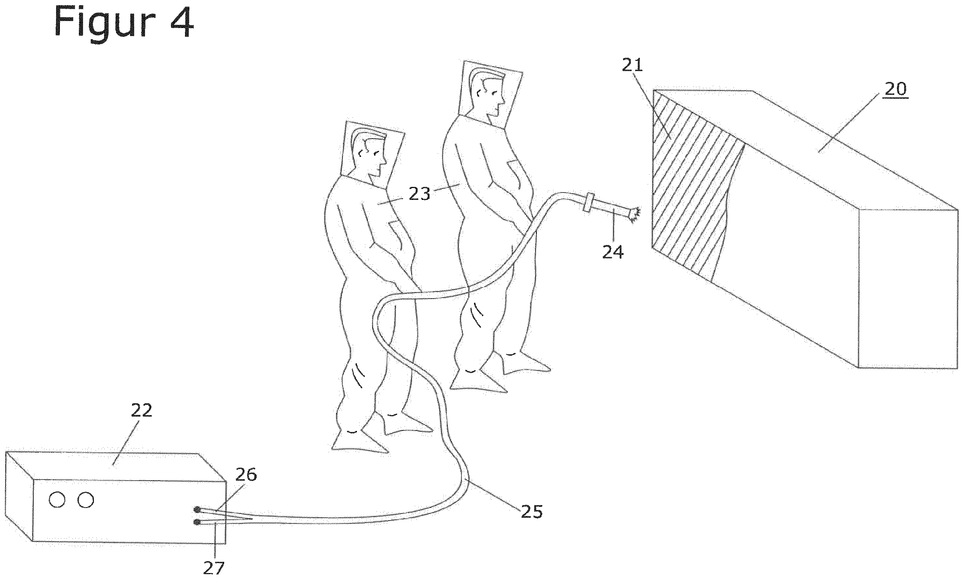

Figur 4 zeigt in einer perspektivischen Ansicht die nicht erfindungsgemäße prinzipielle Vorgehensweise zur Beschichtung von Abbruchmaterialien 20. Die Abbruchmaterialien 20 können hierbei wie gezeigt im einfachsten Fall aus einem herausgesägtem Betonquader bestehen. Ebenso kann es sich um Abbruchmaterialien mit unterschiedlicher Geometrie handeln, welche in einer handhabbaren Größe zu weiteren Lagerung zerteilt wurden. Bei den Abbruchmaterial 20 kann es sich beispielsweise ebenso um einen Stahlträger, Betonbauteile oder andere Umbau- oder Rückbaufragmente einer Kemspaltungsanlage handeln, welche radioaktiv kontaminiert sind. Des Weiteren besteht ohne weiteres die Möglichkeit, dass auf die Abbruchmaterialien 20 nicht nur ein Polyharnstoffgemisch 21 aufgesprüht wird, sondern die Abbruchmaterialien 20 könnten zusätzlich mit einem Geotextil, einem Fließ oder einer Folie eingewickelt werden, um anschließend ein Polyharnstoffgemisch 21 aufzusprühen. Diese Art der Vorgehensweise ist immer dann sinnvoll, wenn es sich zum Beispiel um gepresste Abbruchmaterialien 20 handelt, die bei mechanischer Beanspruchung zerfallen könnten. Ebenso könnte beispielsweise auch Sägestaub oder vergleichbare Rückstände verpresst und in eine Folie gewickelt werden, um anschließend mit einem Polyharnstoffgemisch ummantelt zu werden.

Das Polyharnstoffgemisch 21 wird hierbei von einer oder zwei Personen 23 mithilfe einer Düse 24 aufgetragen, wobei die Düse 24 über einen Schlauch 25 mit einem Fördergerät 22 verbunden ist.

Der Versorgungsschlauch 25 mit den beiden getrennten Schläuchen 26, 27 ermöglicht die Zufuhr der verschiedenen Komponenten des Polyharnstoffgemisches 21 bis zur Düse 24, sodass eine getrennte Führung der Komponenten bis zur Düse 24 gewährleistet ist. Die Vermischung der Komponenten entsteht somit erst in der Düse 24 und die chemische Reaktion nach dem Austreten aus der Düse 24. Bei der ersten Komponente handelt es sich typischer Weise um eine Isocyanatkomponente und bei der zweiten Komponente um eine Harzmischungskomponente. Beiden Komponenten können weitere Zusatzstoffe zugegeben werden, die die Eigenschaften der Beschichtung, insbesondere die Aushärtezeit in gewünschter Weise beeinflussen.

Ferner besteht ohne weiteres die Möglichkeit, dass anstelle einer händisch aufgetragenen Beschichtung eine maschinelle Beschichtung durchgeführt wird, wobei beispielweise die Abbruchmaterialien 20 über eine Förderstrecke einer Beschichtungsvorrichtung zugeführt werden können.

### Bezugszeichenliste

- 1: Betonwand
- 2: Isolierplatten
- 3: Beschichtung
- 5: Innenwandung
- 6: Fugenbereich
- 10: Betonwanne
- 11: Wandbereich
- 12: Bodenbereich
- 13: Isolierplatte
- 14: Beschichtung
- 20: Abbruchmaterial
- 21: Polyharnstoffgemisch
- 22: Fördergerät
- 23: Person
- 24: Düse
- 25: Versorgungsschlauch
- 26: Schlauch
- 27: Schlauch

## Patentansprüche

1. Behälter einer Biogasanlage oder Güllebehälter mit einer Behälterwand (1) aus Beton oder Metall, mit einer auf der Innenwandung (5) der Behälterwand (1) aufgebrachten Schale aus Isolierplatten (2, 13), die auf die Innenwandung (5) unmittelbar aufgeklebt und von der Behälterwand (1) abgestützt sind, wobei die Isolierplatten (2, 13) aus Styrodurplatten bestehen, mit einer elastischen Beschichtung (3, 14) mit säurebeständigen Eigenschaften, die feuchtigkeitsundurchdringlich auf die Schale aus Isolierplatten (2, 13) aufgetragen ist, wobei die Beschichtung (2, 13) aus einem Polyharnstoffgemisch (21) mit einem Anteil von 1 % bis 95 % Polyharnstoff besteht sowie mit in Abständen in die Beschichtung (3, 14) im Stoßbereich der Isolierplatten (2, 13) eingebetteten Dehnungsstreifen.

2. Behälter nach Anspruch 1, **dadurch gekennzeichnet, dass** die Beton- oder Metallflächen der Behälterwand (1) vor dem Aufbringen der Isolierplatten (2, 13) gesandstrahlt sind.

3. Behälter nach Anspruch 1 oder 2, **dadurch gekennzeichnet, dass** die Isolierplatten (2, 13) eine Dicke von 10 mm bis 40 mm, vorzugsweise von 15 mm bis 24 mm aufweisen.

4. Behälter nach einem der vorhergehenden Ansprüche, **dadurch gekennzeichnet, dass** bei Metallwandungen die Isolierplatten (2, 13) in Übergangs- und Nahtbereichen zumindest teilweise ausgeklinkt sind.

5. Behälter nach einem der vorhergehenden Ansprüche, **dadurch gekennzeichnet, dass** die Dehnungsstreifen mehrere Zentimeter, vorzugsweise 4 cm bis 20 cm breit sind.

6. Behälter nach einem der vorhergehenden Ansprüche, **dadurch gekennzeichnet, dass** die Beschichtung (3, 14) eine Schichtdicke von 1mm bis 8 mm, vorzugsweise von 2 mm bis 4 mm aufweist.

7. Behälter nach einem der vorhergehenden Ansprüche, **dadurch gekennzeichnet, dass** die Beschichtung (3, 14) mehrfach übereinander aufgetragen ist und/oder dass die Beschichtung (3, 14) durch Aufschäumen, Aufspritzen, Aufwalzen oder Aufstreichen aufgetragen ist.

## Claims

1. Tank of a biogas plant or slurry tank with a tank wall (1) made of concrete or metal, with a shell of insulating panels (2, 13) applied to the inner wall (5) of the tank wall (1), which panels are bonded directly to the inner wall (5) and are supported by the tank wall (1), wherein the insulating panels (2, 13) consist of styrodur panels with an elastic coating (3, 14) having acid-resistant properties which is applied to the shell of insulating plates (2, 13) in a moisture-impermeable manner, the coating (2, 13) consisting of a polyurea mixture (21) with a proportion of 1% to 95% polyurea, and with expansion strips embedded at intervals in the coating (3, 14) in the joint region of the insulating panels (2, 13).

2. Tank according to claim 1, **characterized in that** the concrete or metal surfaces of the tank wall (1) are sandblasted before application of the insulating panels (2, 3).

3. Tank according to claim 1 or 2, **characterized in that** the insulating panels (2, 13) have a thickness of 10 mm to 40 mm, preferably of 15 mm to 24 mm.

4. Tank according to any one of the preceding claims, **characterized in that**, in the case of metal walls, the insulating panels (2, 13) are at least partially notched in transition and seam regions.

5. Tank according to any one of the preceding claims, **characterized in that** the expansion strips are several centimeters wide, preferably 4 cm to 20 cm wide.

6. Tank according to any one of the preceding claims, **characterized in that** the coating (3, 14) has a layer thickness of 1 mm to 8 mm, preferably of 2 mm to 4 mm.

7. Tank according to any one of the preceding claims, **characterized in that** the coating (3, 14) is applied several times one on top of the other and/or in that the coating (3, 14) is applied by foaming, spraying on, rolling on or brushing on.

## Revendications

1. Réservoir d'une installation de biogaz ou réservoir de lisier avec une paroi de réservoir (1) en béton ou en métal, avec une coque en plaques isolantes (2, 13) appliquée sur la paroi intérieure (5) de la paroi de réservoir (1), qui sont collées directement sur la paroi intérieure (5) et soutenues par la paroi de réservoir (1), les plaques isolantes (2, 13) étant constituées de plaques de styrodur, avec un revêtement élastique (3, 14) avec des propriétés de résistance aux acides, qui est appliqué de manière imperméable à l'humidité sur la coque en plaques isolantes (2, 13), le revêtement (2, 13) étant constitué d'un mélange de polyurée (21) avec une proportion de 1 % à 95 % de polyurée, ainsi qu'avec des bandes de dilatation noyées à intervalles dans le revêtement (3, 14) dans la zone de jonction des plaques isolantes (2, 13).

2. Réservoir selon la revendication 1, **caractérisé en ce que** les surfaces en béton ou en métal de la paroi du réservoir (1) sont sablées avant l'application des plaques isolantes (2, 3).

3. Réservoir selon la revendication 1 ou 2, **caractérisé en ce que** les plaques isolantes (2, 13) ont une épaisseur de 10 mm à 40 mm, de préférence de 15 mm à 24 mm.

4. Réservoir selon l'une des revendications précédentes, **caractérisé en ce que**, dans le cas de parois métalliques, les plaques isolantes (2, 13) sont au moins partiellement encochées dans les zones de transition et de soudure.

5. Réservoir selon l'une des revendications précédentes, **caractérisé en ce que** les bandes de dilatation ont une largeur de plusieurs centimètres, de préférence de 4 cm à 20 cm.

6. Réservoir selon l'une des revendications précédentes, **caractérisé en ce que** le revêtement (3, 14) présente une épaisseur de couche de 1 mm à 8 mm, de préférence de 2 mm à 4 mm.

7. Réservoir selon l'une des revendications précédentes, **caractérisé en ce que** le revêtement (3, 14) est appliqué plusieurs fois l'un sur l'autre et/ou en ce que le revêtement (3, 14) est appliqué par moussage, par pulvérisation, par laminage ou par étalement.
